# FASCICULE DE BREVET EUROPEEN

(11) **EP 0 522 953 B1**
(45) Date de publication et mention de la délivrance du brevet: **28.12.1994**
(21) Numéro de dépôt: 92401942.5
(22) Date de dépôt: 06.07.1992
(51) Int. Cl.: F04D 29/62, F04D 29/58, F04D 25/08, H02K 9/22

(54) **Moto-pulseur d'air**
Motorlüfter
Motor air fan

(30) Priorité: 12.07.1991 FR 9108843
(43) Date de publication de la demande: 13.01.1993
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR)
(74) Mandataire: Polus, Camille

(56) Documents cités:
- EP-A- 0 001 222
- BE-A- 687 207
- FR-A- 2 651 538
- GB-A- 1 151 001
- US-A- 3 434 653

## Description

L'invention concerne les moto-pulseurs d'air et, notamment, ceux destinés à être utilisés dans des automobiles.

Dans de nombreux secteurs industriels, il est nécessaire de diriger des flux d'air sur des équipements pour en assurer la ventilation et/ou la climatisation. C'est par exemple le cas dans l'industrie automobile où l'on se sert de moto-pulseurs d'air de ce type notamment pour la climatisation des habitacles réservés aux occupants, pour l'alimentation en air de surcompresseurs de moteurs ou bien même pour refroidir certains carburateurs ou d'autres points chauds de l'environnement moteur.

Comme il est courant, ce type de moto-pulseurs d'air comprend, habituellement, d'une part, une turbine avec un distributeur et un organe de brassage d'air tel que par exemple une roue à aubes et, d'autre part, un moteur électrique pour entraîner cet organe. Les turbines sont habituellement du type centrifuge et présentent une enceinte creuse avec une chambre à volute en spirale où débouchent un orifice d'entrée coaxial à l'axe de la spirale de la volute pour prélever de l'air, et un orifice de sortie tangentiel pour l'évacuation de l'air prélevé. La roue à aubes qui tourne, habituellement, dans la chambre suivant un axe de rotation coincidant, en principe, avec l'axe de la volute en spirale se présente souvent à la manière d'une cage d'écureuil dont les faces axiales ou bases se déplacent dans leurs plans respectifs à proximité immédiate des surfaces intérieures des parois d'extrémité de la chambre du distributeur de la turbine qui sont au moins partiellement en vis-à-vis. Il a été établi que le rendement d'un tel moto-pulseur d'air dépendait grandement de la précision de la position des faces axiales de la roue à aubes par rapport à ces surfaces des parois de la chambre qui leur font face. Plus la distance, ou jour ou jeu, qui existe entre ces faces et surfaces en vis-à-vis est grande, plus le rendement décroit. On a donc intérêt à maintenir l'écart entre ces faces et surfaces à une valeur la plus petite possible.

L'assemblage des moto-pulseurs d'air traditionnels pose de grandes difficultés puisque, classiquement, le distributeur est fait d'une enceinte creuse avec un fond et fermée par un couvercle, constitué par l'une des parois d'extrémité, qui donne accès à la chambre. L'un de ces fond et couvercle est transpercé d'une ouverture pour le passage de l'arbre du moteur sur lequel est calé la roue à aubes à entraîner. Dans ce type de solution, on réunit d'abord le moteur électrique avec l'un des fond ou couvercle du distributeur de la turbine dépourvu de son autre partie puis on monte la roue à aubes sur l'embout de l'arbre du moteur qui est apparent du côté opposé, cette partie fond ou couvercle étant prisonnière entre moteur et roue à aubes et enfin on referme le couvercle de manière que la roue à aubes soit logée dans la chambre. Le boîtier et le couvercle sont maintenus l'un sur l'autre par vissage, collage, soudage, emboîtement élastique,....

Maintenir un tel écart au minimum minimorum soulève de grandes difficultés. En effet, de par l'existence des tolérances de fabrication de la roue à aubes et de l'enceinte du distributeur où se trouve la chambre, ainsi que l'existence des imprécisions qui résultent de l'empilement de cotes à la suite de la mise en place d'une telle roue sur l'arbre du moteur, puis du moteur avec la roue sur le distributeur de la turbine, on voit que si l'on veut qu'à tout coup un tel moto-pulseur puisse fonctionner correctement, il faut des tolérances et un soin très stricts. A celà s'ajoute en outre le faux rond que peut présenter la roue à aubes sur son axe, ce qui nuit en plus non seulement au jeu mais à l'équilibrage aussi bien statique que dynamique du moto-pulseur.

On réalise ainsi immédiatement qu'une telle solution ne permet ni la précision, ni l'automatisation du montage et de l'assemblage.

Une technique qui permet de remédier à la plupart des inconvénients précédemment évoqués brièvement est exposée dans le document FR-A-2 651 538.

Ce document concerne un moto-pulseur d'air dont l'architecture permet d'assurer un montage de précision tant en ce qui concerne l'empilage des cotes que l'équilibrage, ainsi qu'une relative automatisation de son assemblage qui ne met en oeuvre que des translations parallèles à l'axe commun de la turbine et du moteur.

Toutefois, cette solution n'est pas parfaite spécialement lorsqu'un tel moto-pulseur doit refroidir certains points dans l'environnement du moteur thermique d'un véhicule automobile. En effet, le moto-pulseur fonctionne alors dans une ambiance surchauffée à laquelle sont encore apportées des calories qui proviennent de son propre fonctionnement (frottements des paliers, échauffement électromagnétique, surchauffage aérodynamique,...). Or on sait que ce type de moto-pulseur est construit, au moins pour partie, avec des matériaux synthétiques et il faut alors adopter des matériaux synthétiques spéciaux qui résistent à ces fortes températures; de tels matériaux particuliers sont onéreux et souvent délicats à mettre en oeuvre d'où un surcoût de production.

L'invention a pour but de remédier à ce type d'inconvénients.

L'invention a pour objet un moto-pulseur d'air, notamment pour véhicule automobile, constitué d'une turbine avec, d'une part, un distributeur qui comprend un corps creux avec une paroi latérale pratiquement parallèle à une direction donnée et avec une paroi d'extrémité pratiquement perpendiculaires à cette direction et où ces parois délimitent ensemble une chambre intérieure dans laquelle débouchent un orifice d'entrée pour prélever de l'air et un orifice de sortie pour évacuer l'air prélevé et où ce corps porte un dispositif de fixation et de raccordement destiné à relier cet orifice de sortie à un circuit de distribution d'air, et avec, d'autre part, un organe de brassage d'air inscrit dans un cylindre circulaire de diamètre extérieur déterminé et apte à tourner dans cette chambre suivant un axe parallèle à cette direction déterminée, et aussi constitué d'un moteur électrique destiné à entraîner cet organe de brassage d'air qui comprend un carter avec un boîtier et des flasques d'extrémité destinés à porter des paliers, un arbre tournant dans ces paliers et présentant un embout saillant de l'un de ces flaques pour recevoir cet organe de brassage d'air et un bornier porté par ce carter. Ce moto-pulseur qui comprend aussi un agencement qui est destiné à assurer le montage de ce carter sur ce corps avec des éléments de maintien pour réunir en permanence ces turbine et moteur est remarquable en ce que celui des flasques du carter du moteur qui est destiné à être proche du corps de la turbine est fait en un matériau bon conducteur de la chaleur et est configuré pour servir aussi d'autre paroi d'extrémité du corps délimitant la chambre.

D'autres caractéristiques et avantages de l'invention ressortiront de la lecture de la description et des revendications qui suivent ainsi que de l'examen des figures du dessin, donnés seulement à titre d'exemple, où :
- la Figure 1 est une vue perspective éclatée schématique d'un mode de réalisation d'un moto-pulseur d'air selon l'invention;

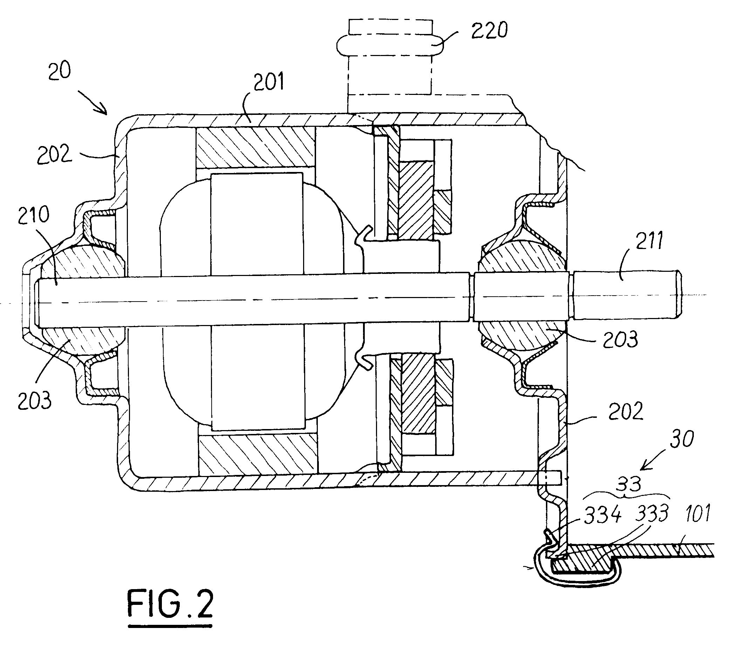

- la Figure 2 est une coupe méridienne partielle de la Figure 1;

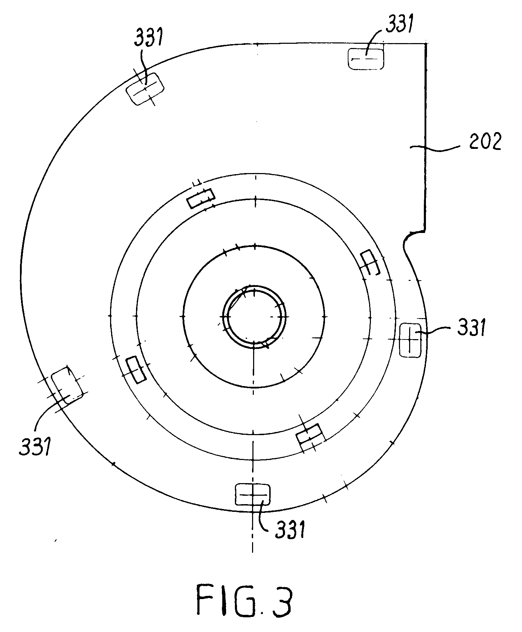

- et la Figure 3 est une vue de détail partielle de la Figure 1 .

Dans ce qui suit, on ne décrira que ce qui se rapporte directement ou indirectement à l'invention. Pour le surplus, le spécialiste de la technique considérée puisera parmi les solutions courantes classiques à sa disposition pour faire face aux problèmes particuliers auxquels il est confronté.

Dans la suite de la description, on utilise toujours un seul et unique numéro de référence pour désigner un élément homologue, quel que soit le mode de réalisation.

Comme on le voit, un moto-pulseur d'air suivant l'invention comprend une turbine 10 avec un distributeur 11 dans lequel peut se déplacer un organe de brassage d'air 12. Ce moto-pulseur d'air comprend aussi un moteur électrique 20 destiné à entraîner l'organe de brassage d'air. Pour réunir la turbine et le moteur électrique, on utilise un agencement de montage 30.

Pour la commodité de la description, on décrira successivement chacun des constituants du moto-pulseur d'air selon l'invention.

Comme on peut l'observer, le distributeur 11 est fait d'un corps 100, creux, avec une paroi latérale 101 parallèle à une direction donnée D et une paroi d'extrémité 102 pratiquement perpendiculaire à cette direction donnée. Ces parois latérales et d'extrémité délimitent, ensemble, une chambre 110. Cette chambre a, par exemple, la configuration d'une volute en spirale d'axe Δ (delta) parallèle à cette direction donnée.

Dans la chambre 110 débouchent un orifice d'entrée 111 pour le prélèvement de l'air et un orifice de sortie 112 pour l'évacuation de l'air prélevé. Dans le mode de réalisation représenté, cet orifice d'entrée 111 se présente à la manière d'une embouchure cylindrique coaxiale à l'axe Δ de la chambre. L'orifice de sortie 112 se présente lui dans ce cas à la manière d'une fenêtre rectangulaire percée tangentiellement dans la paroi latérale 101.

Le distributeur est aussi muni d'un dispositif de fixation et de raccordement 105 de tout type classique courant, de préférence situé à proximité de l'orifice de sortie de manière à pouvoir relier ce dernier à un circuit de distribution non représenté. Par exemple, ce dispositif comprend des regards 106 destinés à recevoir des vis ou analogues et une lèvre 107 périphérique d'étanchéité ou similaire.

L'organe de brassage d'air 12 se présente, par exemple, à la manière d'une roue 120 dont la configuration ressemble, approximativement, à une cage d'écureuil. Cette roue comprend une embase 121, de préférence circulaire percée en son centre d'un alésage 122. Cet alésage est destiné à recevoir l'embout d'un arbre du moteur de manière à pouvoir y être calé, tant en rotation qu'en translation, comme on le comprendra par la suite. Sur cette embase se dresse des aubes 123 longilignes pratiquement parallèles à l'axe de l'alésage. Chacune de ces aubes 123, de préférence à section droite incurvée comme illustré, présente un pied 124 relié à l'embase et une tête 125. Comme on peut l'observer, les têtes 125 de toutes ces aubes sont réunies par une collerette 126. De préférence, seule une partie de chacun de ces pieds est jointe à cette embase et, de même, seule une partie de chacune de ces têtes est jointe à cette collerette. Cette embase 121 a un cercle de diamètre extérieur donné dₑ ou est inscrite dans un tel cercle. La collerette 126, de préférence torique en anneau ou en couronne, présente un diamètre intérieur dᵢ donné ou est circonscrite à un cercle de tel diamètre. On observera que le diamètre dₑ extérieur de l'embase 121 est au plus égal au diamètre dᵢ intérieur de la collerette 126 et très proche de celui-ci.

Comme on le voit, le moteur électrique 20 comprend un carter 200 fait d'un boîtier 201 auquel sont assujettis de toute manière appropriée classique deux flasques 202 terminaux qui portent, chacun, un palier 203. Ces paliers sont destinés à recevoir un arbre 210 qui présente un embout 211 dépassant de l'un des flasques. S'il y a lieu, cet embout a une section droite non circulaire, par exemple carrée, pour recevoir un alésage de section droite complémentaire afin d'assurer le calage en rotation. Une clavette, goupille ou une vis entre cuir-et-chair peut donc aussi bien faire l'affaire comme il est classique. Ce moteur comprend aussi un bornier 220, par exemple assujetti au boîtier 201. Ce bornier permet d'assurer la liaison électrique avec les moyens de commutation du moteur tels que le collecteur et les balais qui portent sur lui.

Selon l'invention celui des flasques 202 du carter 200 du moteur 20 qui est destiné à être proche du corps 100 de la turbine 10 est fait en un matériau bon conducteur de la chaleur et est configuré pour servir aussi d'autre paroi d'extrémité 102 du corps 100 afin de délimiter la chambre 110. Le flasque en question est fait par exemple en tôle métallique et confectionné par emboutissage.

L'agencement de montage 30 de la turbine 10 et du moteur 20 comprend des éléments de maintien 33.

Les éléments de maintien 33 du moteur électrique et de la turbine sont constitués de trous 331 dont certains au moins sont taraudés, ménagés par exemple dans la paroi latérale 101 et dans le flasque 202 en question. Ces éléments de maintien comprennent aussi des vis 332, éventuellement autotaraudeuses, engagées dans ces trous. S'il y a lieu, la paroi latérale 101 porte des bossages aux endroits appropriés et ce sont dans ces bossages que sont ménagés les trous 331.

Selon une autre variante, ces éléments de maintien 33 comprennent des rebords 333 disposés en vis-à-vis sur la paroi latérale 101 du corps 100 et sur ce flasque 202 du carter 200, et des pinces 334 élastiques.

Selon une autre solution, les éléments de maintien 33 comprennent des trous 331 qui sont ménagés dans ce flasque 202 du carter 200 et des tétons en relief portés par la paroi latérale 101 du corps 100. Ces tétons sont aptes à être déformés une fois engagés dans ces trous 331, pour former un renflement de retenue. Ce renflement peut être obtenu mécaniquement ou thermiquement, comme il est classique, en particulier si le corps est fait en une matière synthétique; on obtient alors une sorte de rivet.

On voit donc que ce flasque joue en quelque sorte le rôle d'un couvercle pour la chambre 110. Pour parfaire l'étanchéité, la jonction entre flasque 202 et paroi latérale 101 peut ménager une chicane obtenue par un assemblage à nervure et méplat.

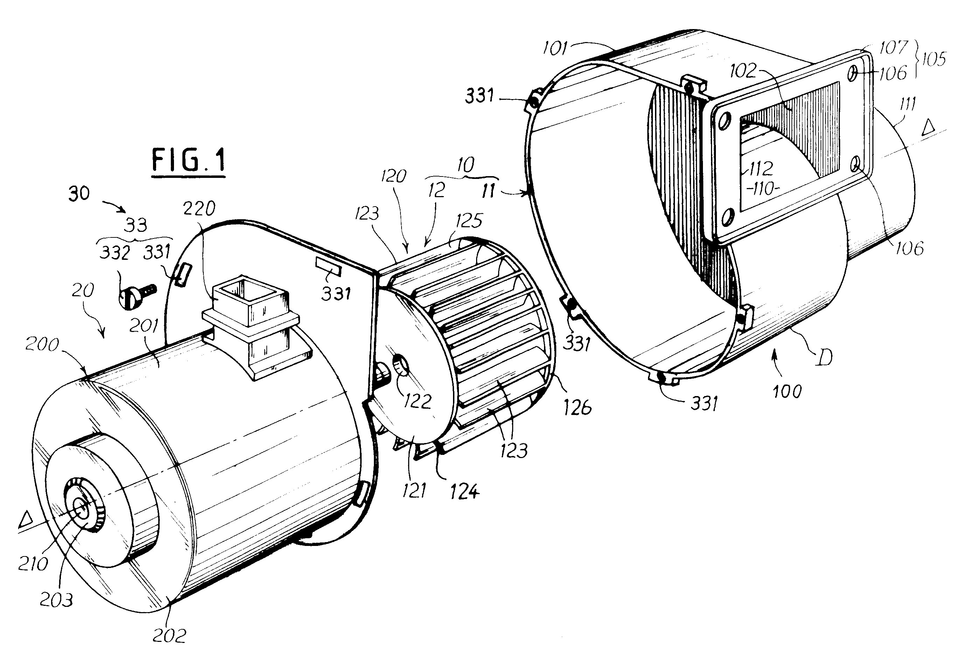

Le moto-pulseur d'air selon l'invention est monté comme cela résulte clairement de la vue perspective éclatée de la Figure 1 notamment. De préférence, les moyens de commutation du moteur sont placés dans le carter 200 et sont voisins de celui des flasques 202 qui est destiné à être appliqué contre le corps 100. On fait en sorte que l'embout 211 de l'arbre 210 est saillant à l'extérieur du flasque 202 en question, et ce flasque est présenté pour qu'il soit proche de la chambre 110. De la sorte, ce flasque peut être ventilé et refroidi directement sans qu'une cloison vienne intercepter le flux de l'air brassé par la roue à aubes et, bon conducteur thermiquement, ce flasque peut aisément évacuer des calories.

Comme on peut l'observer clairement, la technique selon l'invention permet d'abord une fois le moteur électrique terminé d'engager sur l'embout de son arbre la roue à aubes ou organe de brassage d'air. Une fois cet engagement fait, on peut placer avec précision cet organe de brassage d'air et le fixer axialement en translation sur l'embout à l'aide de toutes techniques appropriées telles que rivetage, vissage, soudage, écrasement ou autre, de manière que l'une au moins de ses faces axiales soit placée à une distance de celui des flasques du moteur qui lui est le plus proche, qui soit comprise dans l'amplitude du domaine de tolérance prédéterminé. Ceci peut se faire facilement par exemple à l'aide de calibres comme il est connu. Ceci fait, on peut dresser l'une ou l'autre, ou les deux, faces axiales de l'organe de brassage d'air, ici les faces extérieures de l'embase et de la collerette, de manière à les rendre perpendiculaires à l'axe de rotation de l'arbre et de manière à les situer à la distance nominale de ce flasque, aux précisions d'usinage près. Le moteur ainsi équipé de l'organe de brassage d'air et après équilibrage statique et dynamique au besoin, on peut le présenter sur le corps du distributeur de la turbine en engageant cet organe de brassage d'air dans l'agencement de montage. Le fait que le corps de la turbine soit dépourvu de paroi d'extrémité du côté qui reçoit le moteur prééquipé de l'organe de brassage d'air, permet d'introduire l'organe de brassage d'air dans la chambre directement par une translation parallèle à l'axe Δ (delta). A la suite de ceci, on oriente convenablement relativement à cet axe, le moteur électrique et le corps du distributeur pour leur donner la position assignée. On peut alors appliquer ce flasque contre le corps et les fixer mutuellement l'un à l'autre pour les retenir dans cette position à l'aide des éléments de maintien.

On a décrit et illustré des modes de réalisation où l'organe de brassage d'air est une roue à aubes. Il est clair que l'invention s'applique de même aux cas où cet organe de brassage d'air est une hélice.

De préférence, le corps du distributeur est fait en matière synthétique et obtenu par exemple par moulage. Ce corps est fait de préférence monobloc ou préassemblé d'un seul tenant.

De préférence, l'organe de brassage d'air est fait en matière synthétique et obtenu par exemple par moulage. Comme on le comprend aisément, le choix adopté de l'architecture selon l'invention permet l'obtention de cet organe de brassage d'air avec un moule seulement en deux parties, un poinçon et une matrice qui s'emboîtent et se dégagent simplement par une simple translation et cela sans qu'il soit nécessaire d'utiliser des noyaux mobiles ou non.

Quant au moteur, de préférence au moins celui de ses flasques qui est au contact du distributeur, est métallique comme déjà indiqué.

De ce qui précède, on comprend qu'on s'est affranchi de tous les problèmes de tolérance et des difficultés qui résultent de l'empilement de cotes, puisque la jonction de la turbine et du moteur se fait suivant un plan qui est défini, d'une part, par une face d'une paroi latérale du corps et, d'autre part, par une face d'un flasque du carter et que ces faces servent de surfaces de référence pour ajuster les cotes, et donc qu'on s'est affranchi des ennuis de montage puisque l'assemblage final est précédé d'un assemblage partiel.

Outre tous ces avantages, on observera que grâce à l'invention en cas de défaillance du moteur électrique, il est facile de procéder à un échange standard sans qu'il soit nécessaire de se livrer à des opérations fastidieuses.

Par ailleurs, l'absence de paroi d'extrémité du corps de la turbine, du côté du moteur permet d'améliorer la ventilation du flasque du carter de ce dernier qui tient lieu de couvercle ou de deuxième paroi d'extrémité au corps pour clore la chambre. Cette absence permet aussi de faire des économies de matière première et de coûts de fabrication et de montage sur cette pièce supprimée.

## Revendications

1. Moto-pulseur d'air notamment pour véhicule automobile, constitué, entre autres, d'une turbine (10) avec, d'une part, un distributeur (11) qui comprend un corps (100) creux avec une paroi (101) latérale pratiquement parallèle à une direction (D) donnée et avec une paroi (102) d'extrémité pratiquement perpendiculaire à cette direction où ces parois (101, 102) délimitent ensemble une chambre (110) intérieure dans laquelle débouche un orifice d'entrée (111) pour prélever de l'air et un orifice de sortie (112) pour évacuer l'air prélevé et où ce corps (110) porte un dispositif (105) de fixation et de raccordement destiné à relier cet orifice de sortie (112) à un circuit de distribution d'air et, d'autre part, avec un organe de brassage d'air (12) inscrit dans un cylindre circulaire de diamètre extérieur déterminé et apte à tourner dans cette chambre (110) suivant un axe ( Δ ) parallèle à cette direction (D) déterminée, et aussi constitué d'un moteur électrique (20) destiné à entraîner cet organe de brassage d'air (12) qui comprend un carter (200) avec un boîtier (201) et des flasques (202) d'extrémité destinés à porter des paliers (203), un arbre (210) tournant dans ces paliers (203) et présentant un embout (211) saillant de l'un de ces flasques (202) pour recevoir cet organe de brassage d'air (12) et un bornier (220) porté par ce carter (200), ce moto-pulseur comprenant un agencement (30) qui est destiné à assurer le montage de ce carter (200) sur ce corps (100) avec des éléments de maintien (33) pour réunir en permanence ces turbine (10) et moteur (20) et étant caractérisé en ce que celui des flasques (202) du carter (200) du moteur (201) qui est destiné à être proche du corps (100) de la turbine (10) est fait en un matériau bon conducteur de la chaleur et est configuré pour servir aussi d'autre paroi d'extrémité du corps (100) délimitant la chambre (110).

2. Moto-pulseur selon la revendication 1,
caractérisé en ce que les éléments de maintien (33) comprennent des trous (331) qui sont ménagés dans la paroi latérale (101) du corps (100) et dans ce flasque (202) et dont certains sont destinés à être taraudés, et des vis (332) s'il y a lieu autotaraudeuses, engagées dans ces trous (331).

3. Moto-pulseur selon la revendication 2,
caractérisé en ce que les trous (331) de la paroi latérale (10) sont ménagés dans des bossages.

4. Moto-pulseur selon la revendication 1,
caractérisé en ce que les éléments de maintien (33) comprennent des rebords en vis-à-vis (333) sur la paroi latérale (101) du corps (100) et sur ce flasque (202) et des pinces élastiques (334).

5. Moto-pulseur selon la revendication 1,
caractérisé en ce que les éléments de maintien (33) comprennent des trous (331) qui sont ménagés dans ce flasque (202) et des tétons en relief portés par la paroi latérale (101) et aptes à être déformés une fois engagés dans ces trous (331) pour former un renflement de retenue.

## Claims

1. Powered air blower particularly for motor vehicles consisting, inter alia, of a turbine (10) having, on the one hand, a distributor (11) which comprises a hollow body (100) with a side wall (101) substantially parallel to a given direction (D) and with an end wall (102) substantially perpendicular to this direction, wherein these walls (101, 102) together define an inner chamber (110) into which an intake port (111) opens for taking the air and an outlet port (112) for evacuating the air taken and wherein this body (110) has a fixing and connecting device (105) adapted to connect this outlet port (112) to an air distribution circuit and, on the other hand, having an air mixing device (12) fitted in a circular cylinder of a specified outer diameter and adapted to rotate in this chamber (110) about an axis (Δ) parallel to the specified direction (D), and also consisting of an electric motor (20) intended to drive this air mixing device (12) which comprises a crankcase (200) with a housing (201) and end flanges (202) adapted to carry bearings (203), a shaft (210) rotating in these bearings (203) and having a nozzle (211) projecting from one of these flanges (202) to receive the air mixing device (12), and a terminal member (220) carried by said crankcase (200), this powered air blower having an arrangement (30) which is intended to ensure that said crankcase (200) is mounted on said body (100) with retaining elements (33) for permanently connecting the turbine (10) and motor (20) and being characterised in that the particular flange (202) of the crankcase (200) of the motor (201) which is intended to be close to the body (100) of the turbine (10) is made of a material which is a good conductor of heat and is arranged so as to act also as the other end wall of the body (100) which defines the chamber (110).

2. Powered air blower according to claim 1,
characterised in that the retaining elements (33) have holes (331) which are provided in the side wall (101) of the body (100) and in this flange (202) and some of which are intended to be threaded, and screws (332), optionally self-tapping, engaging in these holes (331).

3. Powered air blower according to claim 2,
characterised in that the holes (331) in the side wall (10) are formed in bosses.

4. Powered air blower according to claim 1,
characterised in that the retaining elements (33) comprise opposing edges (333) on the side wall (101) of the body (100) and on this flange (202) and resilient clips (334).

5. Powered air blower according to claim 1,
characterised in that the retaining elements (33) have holes (331) which are provided in the flange (202) and protruding studs on the side wall (101) which are adapted to be deformed once they have engaged in the holes (331) to form a retaining bead.

## Patentansprüche

1. Motorlüfter, insbesondere für Kraftfahrzeuge, der u. a. aus einer Turbine (10) mit einem Verteiler (11), der ein hohles Gehäuse (100) mit einer Seitenwand (101), die sich praktisch parallel zu einer vorgegebenen Richtung (D) erstreckt, und einer Stirnwand (102), die praktisch senkrecht zu dieser Richtung verläuft, umfaßt, wobei die Wände (101, 102) zusammen eine Innenkammer (110) begrenzen, in die eine Eintrittsöffnung (111) zur Entnahme von Luft und eine Austrittsöffnung (112) zum Evakuieren der entnommenen Luft münden, und wobei das Gehäuse (110) eine Befestigungs- und Verbindungsvorrichtung (105) trägt, die zum Verbinden der Austrittsöffnung (112) mit einem Verteilerkreis der Luft dient, aus einer Einrichtung (12) zur Durchwirbelung der Luft, die in einen Kreiszylinder mit vorgegebenem Außendurchmesser eingeschrieben ist und sich in der Kammer (110) um eine Achse (Δ) parallel zu der vorgegebenen Richtung (D) drehen kann, und aus einem Elektromotor (20) besteht, der zum Antreiben der Einrichtung (12) zur Verwirbelung der Luft dient und ein Gehäuse (200) mit einem Mantel (201) und stirnseitigen Lagerschilden (202), die zum Tragen von Lagern (203) dienen, eine Welle (210), die sich in den Lagern (203) dreht und einen von einem der Lagerschilde (202) vorstehenden Ansatz (211) zur Aufnahme der Einrichtung (12) zur Verwirbelung der Luft aufweist, und einen vom Gehäuse (200) getragenen Anschluß (220) umfaßt, wobei der Motorlüfter eine Einrichtung (30) besitzt, die dazu dient, die Montage des Gehäuses (200) am Gehäuse (100) mit Halteelementen (33) sicherzustellen, um die Turbine (10) und den Motor (20) auf permanente Weise miteinander zu vereinigen, dadurch gekennzeichnet, daß dasjenige Lagerschild (202) des Gehäuses (200) des Motors (201), das dazu bestimmt ist, nahe am Gehäuse (100) der Turbine (10) zu liegen, aus einem gut wärmeleitenden Material hergestellt und so ausgebildet ist, daß es auch als andere Stirnwand des die Kammer (110) begrenzenden Gehäuses (100) dient.

2. Motorlüfter nach Anspruch 1, dadurch gekennzeichnet,
daß die Halteelemente (33) Löcher (331), die in der Seitenwand (101) des Gehäuses (100) und im Lagerschild (202) vorgesehen sind und von denen in bestimmte ein Gewinde eingeschnitten werden kann, und Schrauben (332) umfassen, die ggf. selbstschneidend mit den Löchern (331) in Eingriff stehen.

3. Motorlüfter nach Anspruch 2, dadurch gekennzeichnet,
daß die Löcher (331) dar Seitenwand (10) in Augen vorgesehen sind.

4. Motorlüfter nach Anspruch 1, dadurch gekennzeichnet,
daß die Halteelemente (33) gegenüberliegende Randleisten (333) an der Seitenwand (101) des Gehäuses (100) und am Lagerschild (202) sowie elastische Klemmen (334) umfassen.

5. Motorlüfter nach Anspruch 1, dadurch gekennzeichnet,
daß die Halteelemente (33) Löcher (331), die im Lagerschild (202) vorgesehen sind, und räumliche Ansätze umfassen, die von der Seitenwand (101) getragen werden und verformt werden können, wenn sie einmal mit den Löchern (331) in Eingriff stehen, um eine Halteverstärkung zu bilden.
